# EUROPEAN PATENT APPLICATION

(11) **EP 2 833 173 A1**
(43) Date of publication of application: **04.02.2015**
(21) Application number: 13769533.4
(22) Date of filing: 15.03.2013
(51) Int. Cl.: G02B 5/26, B32B 9/00, C03C 17/36

(54) **HEAT-RAY-SHIELDING MATERIAL AND LAMINATED STRUCTURE**

(30) Priority: 29.03.2012 JP 2012075550
(71) Applicant: Fujifilm Corporation, Minato-ku Tokyo 106-8620 (JP)
(72) Inventor: MATSUNO Ryou, Ashigarakami-gun, Kanagawa 258-8577 (JP)
(74) Representative: Hoffmann Eitle
(86) International application number: PCT/JP2013/057425
(87) International publication number: WO 2013/146355

(57) **Abstract**

A heat ray shielding material comprising a metal particle-containing layer that contains at least one kind of metal particle and an overcoat layer that is in close contact with at least one surface of the metal particle-containing layer, wherein hexagonal to circular tabular metal particles are contained in 60% by number or more relative to total number of the metal particles contained in the metal particle-containing layer, a main plane of the hexagonal to circular, tabular metal particles is plane-oriented in a range of from 0° to ±30° on average relative to one surface of the metal particle-containing layer, and the overcoat layer contains fine particles, exhibits favorable adhesion-failure resistance, scratch resistance and low haze.

## Description

### Technical Field

The present invention relates to a heat ray shielding material and a laminate structure using the heat ray shielding material. Specifically, the present invention relates to a heat ray shielding material with favorable adhesion-failure resistance and scratch resistance and low haze, and a laminate structure using the heat ray shielding material.

### Background Art

In recent years, as one of energy saving measures for reducing carbon dioxide, heat ray shieldability-imparting materials have been developed for windows of vehicles and buildings. From the viewpoint of heat ray shieldability (solar radiation heat acquisition rate), desired are heat reflective types with no reradiation rather than heat absorptive types with indoor reradiation of absorbed light (in an amount of about 1/3 of the absorbed solar energy), for which various proposals have been made.

For example, a metal thin film of Ag is generally used as a heat ray reflecting material since the reflectance is high, but reflects not only visible light or heat rays but also radio waves, and thus has a problem in that the visible light transmittance and the radio wave transmittance are low. For increasing the visible light transmittance, the Low-E glass (for example, by Asahi Glass) using a multilayer film of Ag and ZnO is widely used in buildings, but the Low-E glass has a problem in that the radio wave transmittance is low since a metal thin film of Ag is formed on its surface.

As a method for solving this problem, Patent Literature 1 discloses a heat ray shielding material which has a metal particle-containing layer containing at least one kind of metal particle, in which the metal particles have tabular metal particles having a hexagonal to circular form in a ratio of at least 60% by number relative to total number of the metal particles contained in the metal particle-containing layer and the main plane of tabular metal particles is plane-oriented in a range of from 0° to ±30° relative to one surface of the metal particle-containing layer. With this configuration, it is possible to provide a heat ray shielding material which has high reflection wavelength selectivity and reflection band selectivity, and excellent visible light transmittance and radio wave transmittance. Examples of Patent Literature 1 disclose a heat ray shielding material provided with a protective layer 1 µm thick which is formed by coating and drying a polyvinyl butyral solution on a surface of an Ag hexagonal tabular particles-fixing glass substrate.

In technical fields other than the heat ray shielding material, when such a protective layer is provided, known is an example in which fine particles are added to the protective layer. For example, in the silver halide photographic sensitive material field, there is a difference in that not the metal silver but the silver salt is used in the photosensitive layer, but a layer to which fine articles such as colloidal silica whose mean particle diameter is 0.005 µm or more and 0.4 µm or less are added is provided on the photosensitive layer containing silver halide as a protective layer. Therefore, disclosed is that the occurrence of adhesion failure (blocking) can be reduced when a silver halide photographic sensitive material is wound on a spool with the diameter of 10 mm or less and 3 mm or more.

On the other hand, from the viewpoint of the visibility, the safety, and the like, the heat ray shielding material for windows of vehicles or buildings is required to have the high transparency, and, specifically, to have the low transmission haze. In addition, in the Examples of Patent Literature 1 in which the protective layer is provided, disclosed is that the haze is 2.5%, but Patent Literature 2 rarely discloses the haze.

### Citation List

### Patent Literatures

Patent Literature 1: JP-A-2011-118347
Patent Literature 2: JP-A-7-219120

### Summary of Invention

### Technical Problem

The present inventor investigated an existence state of tabular metal particles in the metal particle-containing layer with respect to the heat ray shielding material disclosed in Patent Literature 1, and found that heat ray shielding worsens when the plane orientation is too random. In addition, when the present inventor stuck the heat ray shielding material to a windowpane or the like, and though the plane orientation of the tabular metal particles was held at the time of being formed, the arrangement of the tabular metal particles may not be held when stuck to a windowpane or the like as the heat ray shielding material, and then found that the heat ray shielding function worsens. Further, a problem of adhesion failure (blocking) occurring in the heat ray shielding material of the aspect disclosed in Patent Literature 1 is found.

The present invention is to solve the above-mentioned problems so as to achieve the following objects. In other words, an object of the present invention is to provide a heat ray shielding material with favorable adhesion-failure resistance and scratch resistance and with low haze. Solution to Problem

The present inventor has made assiduous investigations for solving the above-mentioned problems, and, as a result, has found the following fact and thus has made the present invention. In other words, a heat ray shielding material includes a metal particle-containing layer that contains at least one kind of metal particle; and an overcoat layer that is in close contact with at least one surface of the metal particle-containing layer, in which hexagonal to circular tabular metal particles are contained in 60% by number or more relative to total number of the metal particles contained in the metal particle-containing layer, in which a main plane of the hexagonal to circular, tabular metal particles is plane-oriented in a range of from 0° to ±30° on average relative to one surface of the metal particle-containing layer, and in which the overcoat layer contains fine particles. With this configuration, the heat ray shielding material has favorable adhesion-failure resistance and scratch resistance and low haze.

The present invention which is specific means for solving the problems is as follows.
[1] A heat ray shielding material including a metal particle-containing layer that contains at least one kind of metal particle; and an overcoat layer that is in close contact with at least one surface of the metal particle-containing layer, in which hexagonal to circular tabular metal particles are contained in 60% by number or more relative to total number of the metal particles contained in the metal particle-containing layer, in which a main plane of the hexagonal to circular, tabular metal particles is plane-oriented in a range of from 0° to ±30° on average relative to one surface of the metal particle-containing layer, and in which the overcoat layer contains fine particles.
[2] Preferably, in the heat ray shielding material according to [1], the fine particles are colloidal silica.
[3] Preferably, in the heat ray shielding material according to [1] or [2], a mean particle diameter of the fine particles is from 5 nm to 1500 nm.
[4] Preferably, in the heat ray shielding material according to any one of [1] to [3], a mean particle diameter of the fine particles is from 5 nm to 300 nm.
[5] Preferably, in the heat ray shielding material according to any one of [1] to [4], a transmission haze is at most 3%.
[6] Preferably, in the heat ray shielding material according to any one of [1] to [5], the overcoat layer further contains a binder, and a mass ratio of the fine particles to the binder in the overcoat layer is from 0.02 to 0.4.
[7] Preferably, in the heat ray shielding material according to any one of [1] to [6], a thickness of the overcoat layer is from 100 nm to 2000 nm.
[8] Preferably, in the heat ray shielding material according to any one of [1] to [7], when the thickness of the metal particle-containing layer is referred to as d, at least 80% by number of the hexagonal to circular, tabular metal particles exist in a range of from the surface to d/2, of the metal particle-containing layer.
[9] Preferably, in the heat ray shielding material according to [8], the overcoat layer is in close contact with the surface of the metal particle-containing layer on a side on which at least 80% by number of the hexagonal to circular, tabular metal particles are located.
[10] Preferably, in the heat ray shielding material according to any one of [1] to [9], a coefficient of variation of particle size distribution of the hexagonal to circular, tabular metal particles is at most 30%.
[11] Preferably, in the heat ray shielding material according to any one of claims [1] to [10], a mean particle diameter of the hexagonal to circular, tabular metal particles is from 70 nm to 500 nm, and an aspect ratio (mean particle diameter/mean particle thickness) of the hexagonal to circular, tabular metal particles is from 8 to 40.
[12] Preferably, in the heat ray shielding material according to any one of [1] to [11], the tabular metal particles contain silver.
[13] Preferably, in the heat ray shielding material according to any one of [1] to [12], visible light transmittance is at least 65%.
[14] Preferably, the heat ray shielding material according to any one of [1] to [13] further includes a substrate that is disposed on a surface on an opposite side to the surface of the metal particle-containing layer where the overcoat layer is disposed.
[15] Preferably, in the heat ray shielding material according to any one of [1] to [14], a thickness of the substrate is from 10 µm to 100 µm.
[16] Preferably, the heat ray shielding material according to any one of [1] to [15], further includes a metal oxide particle-containing layer that contains at least one kind of metal oxide particle.
[17] Preferably, in the heat ray shielding material according to [16], the metal oxide particles are tin-doped indium oxide particles.
[18] Preferably, in the heat ray shielding material according to any one of [1] to [17], the heat ray shielding material is wound in a roll form.
[19] Preferably, in the heat ray shielding material according to any one of [1] to [18], the overcoat layer is an adhesive layer.
[20] A laminate structure including the heat ray shielding material according to any one of [1] to [19]; and glass or plastic that is laminated with the heat ray shielding material.

### Advantageous Effects of Invention

According to the present invention, it is possible to solve the problems in the related art so as to achieve the above-mentioned objects, and to provide a heat ray shielding material with favorable adhesion-failure resistance and scratch resistance and with low haze.

### Brief Description of Drawings

Fig. 1 is a schematic view showing one example of the heat ray shielding material of the present invention.
Fig. 2 is a schematic view showing another example of the heat ray shielding material of the present invention.
Fig. 3 is a schematic view showing another example of the heat ray shielding material of the present invention.
Fig. 4 is a schematic view showing another example of the heat ray shielding material of the present invention.
Fig. 5A is a schematic cross-sectional view showing an example of the existence condition of a metal particle-containing layer that contains hexagonal to circular, tabular metal particles in the heat ray shielding material of the present invention.
Fig. 5B is a schematic cross-sectional view showing the existence condition of a metal particle-containing layer that contains hexagonal to circular, tabular metal particles in the heat ray shielding material of the present invention, and explains the angle (θ) between the metal particle-containing layer that contains hexagonal to circular, tabular metal particles (which is parallel to the plane of the substrate) and the main plane (that determines the circle-equivalent diameter D) of the hexagonal to circular, tabular metal particles.
Fig. 5C is a schematic cross-sectional view showing the existence condition of a metal particle-containing layer that contains hexagonal to circular, tabular metal particles in the heat ray shielding material of the present invention, and shows the existence region of the tabular metal particles in the depth direction of the heat ray shielding material in the metal particle-containing layer.
Fig. 5D is a schematic cross-sectional view showing another example of the existence condition of a metal particle-containing layer that contains hexagonal to circular, tabular metal particles in the heat ray shielding material of the present invention.
Fig. 5E is a schematic cross-sectional view showing another example of the existence condition of a metal particle-containing layer that contains hexagonal to circular, tabular metal particles in the heat ray shielding material of the present invention.
Fig. 5F is a schematic cross-sectional view showing another example of the existence condition of a metal particle-containing layer that contains hexagonal to circular, tabular metal particles in the heat ray shielding material of the present invention.
Fig. 5G is a schematic cross-sectional view showing another example of the existence condition of a metal particle-containing layer that contains hexagonal to circular, tabular metal particles in the heat ray shielding material of the present invention.
Fig. 6A is a schematic perspective view showing an example of the shape of a tabular metal particle contained in the heat ray shielding material of the present invention, and shows a circular tabular metal particle.
Fig. 6B is a schematic perspective view showing an example of the shape of a tabular metal particle contained in the heat ray shielding material of the present invention, and shows a hexagonal tabular metal particle.

### Description of Embodiments

The description of the constitutive elements of the present invention given hereinunder may be for some typical embodiments of the present invention, to which, however, the present invention should not be limited. In this description, the numerical range expressed by the wording "a number to another number" means the range that falls between the former number indicating the lower limit of the range and the latter number indicating the upper limit thereof.

### [Heat Ray Shielding Material]

The heat ray shielding material of the present invention has a metal particle-containing layer that contains at least one kind of metal particle, and an overcoat layer that is in close contact with at least one surface of the metal particle-containing layer, in which hexagonal to circular tabular metal particles are contained in 60% by number or more relative to total number of the metal particles contained in the metal particle-containing layer; the main plane of the hexagonal to circular, tabular metal particles is plane-oriented in a range of from 0° to ±30° on average relative to one surface of the metal particle-containing layer; and the overcoat layer contains fine particles.

### <Characteristics>

The heat ray shielding material of the present invention with this configuration has favorable adhesion-failure resistance and scratch resistance, and low haze.

The haze of the heat ray shielding material of the present invention is preferably at most 3% from the viewpoint of the improvement of the appearance and visibility, more preferably at most 2.5%, and even more preferably at most 2.2%. When the haze is more than 20%, then it would be unfavorable for safety since the material may cause a trouble in seeing outside objects when used, for example, for glass for automobiles or for glass for buildings.

Preferably, the maximum value of the solar reflectance of the heat ray shielding material of the invention is in a range of from 600 nm to 2,000 nm, (more preferably from 800 nm to 1,800 nm) for increasing efficiency of the heat ray reflectance.

Preferably, the visible light transmittance of the heat ray shielding material of the present invention is at least 60%, more preferably at least 65%, and even more preferably at least 70%. When the visible light transmittance is less than 60%, then the material may cause a trouble in seeing outside objects when used, for example, for glass for automobiles or for glass for buildings.

Preferably, the UV transmittance of the heat ray shielding material of the present invention is at most 5%, more preferably at most 2%. When the UV transmittance is more than 5%, then the color of the metal particle-containing layer would be changed by the UV rays of sunlight.

### <Layer Configuration/Form>

In one preferred embodiment thereof, the heat ray shielding material of the present invention optionally has any other layer such as an adhesive layer, a UV absorbent layer, a substrate layer, and a metal oxide particle-containing layer.

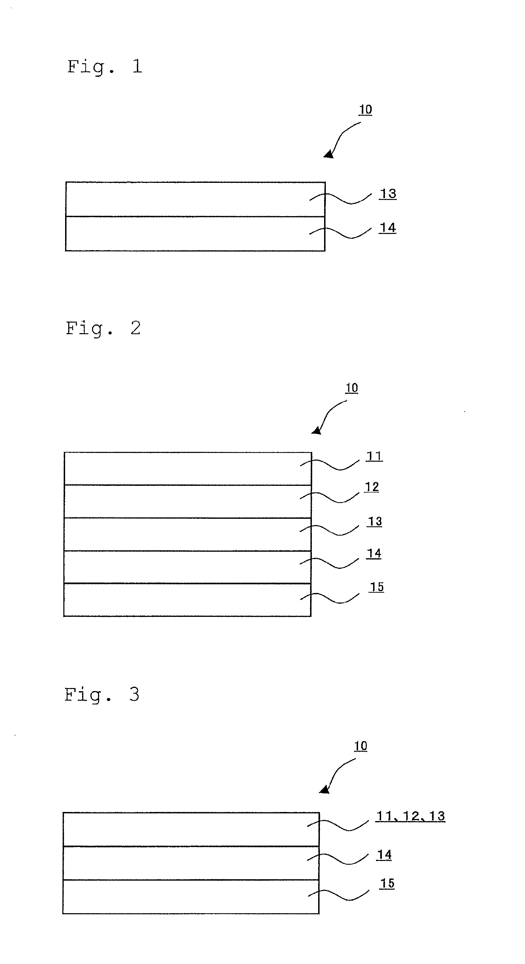

Regarding the layer configuration of the heat ray shielding material 10, there is mentioned an embodiment where the heat ray shielding material 10 has, as shown in Fig. 1, a metal particle-containing layer 14 that contains at least one kind of metal particle, and an overcoat layer 13, and the overcoat layer 13 contains fine particles. Also mentioned is an embodiment as shown in Fig. 2, where the material has a substrate 15, the metal particle-containing layer 14 on the substrate, the overcoat layer 13 on the metal particle-containing layer, a UV absorbent layer 12 on the overcoat layer, and an adhesive layer 11 on the UV absorbent layer.

In addition, favorably mentioned is an embodiment as shown in Fig. 3, where the material has the overcoat layer 13 which also functions as the UV absorbent layer 12 and the adhesive layer 11, and has the substrate 15, the metal particle-containing layer 14 on the substrate, and the overcoat layer 13 which also functions as the UV absorbent layer 12 and the adhesive layer 11 on the metal particle-containing layer.

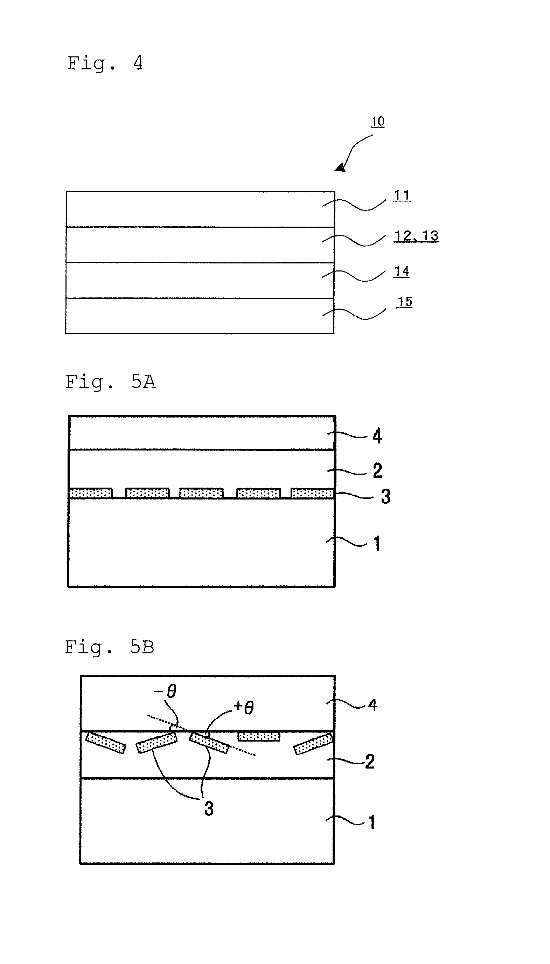

Further, also favorably mentioned is an embodiment as shown in Fig. 4, where the material has the overcoat layer 13 which functions as the UV absorbent layer 12, and has the substrate 15, the metal particle-containing layer 14 on the substrate, the overcoat layer 13 which functions as the UV absorbent layer 12 on the metal particle-containing layer, and the adhesive layer 11 on the overcoat layer 13 which functions as the UV absorbent layer 12.

The head ray shielding material of the present invention, as shown in Figs. 1 to 4, has the overcoat layer 13 containing fine particles so as to appropriately protect the hexagonal to circular, tabular metal particles contained in the metal particle-containing layer, and, as a result, it is possible to solve the problems such as oxidation/sulfuration of the tabular metal particles due to movement of a substance, scratches, contamination in the production step due to peeling-away of the tabular metal particles, and arrangement disorder of tabular metal particles in forming any other layer on the metal particle-containing layer. Especially, scratch resistance can be imparted to the material. This effect is extremely notable when the tabular metal particles are eccentrically located on the surface of the overcoat layer side of the metal particle-containing layer.

The heat ray shielding material of the present invention may be in a state of being a sheet form, and may be in a state of being wound in a roll form. Since the heat ray shielding material of the present invention has the favorable adhesion-failure resistance, there are few failures when the plurality of heat ray shielding materials of the present invention are stacked in a case of being in the sheet form, and creaking is reduced in a case of being in the roll form. In addition, in a case where the heat ray shielding material of the present invention is in a state of being wound in the roll form, the material is preferably wound on a core with the diameter of 50 mm to 250 mm. Preferably, the heat ray shielding material of the present invention has the adhesion-failure resistance which is favorable in a range of 2 kg/cm² to 20 kg/cm².

### <Configuration of Each Layer>

### 1. Metal Particle-containing Layer

Not specifically defined, the metal particle-containing layer containing at least one kind of metal particle may be suitably selected in accordance with the intended object, so far as the metal particles have tabular metal particles having a hexagonal to circular form in a ratio of at least 60% by number relative to total number of the metal particles contained in the metal particle-containing layer and the main plane of the hexagonal to circular, tabular metal particles is plane-oriented in a range of from0° to ±30° relative to one surface of the metal particle-containing layer.

Not adhering to any theory, the heat ray shielding material of the present invention is not limited to the production method mentioned below; however, the tabular metal particles may be eccentrically located in one surface of the metal particle-containing layer by adding a specific latex thereto in forming the metal particle-containing layer.

### - 1-1. Metal Particles -

Not specifically defined, the metal particles may be suitably selected in accordance with the intended object thereof so far as they contain hexagonal to circular, tabular metal particles in a ratio of at least 60% by number relative to total number of the metal particles contained in the metal particle-containing layer, and the main plane of the hexagonal to circular, tabular metal particles is plane-oriented in a range of from 0° to ±30° relative to one surface of the metal particle-containing layer. When the thickness of the metal particle-containing layer is referred to as d, it is desirable that at least 80% by number of the hexagonal to circular, tabular metal particles exist in the range of from the surface of the metal particle-containing layer to the depth of d/2 thereof, more preferably in the range of from the surface of the metal particle-containing layer to the depth of d/3 thereof.

Regarding the existence form of the hexagonal to circular, tabular metal particles in the metal particle-containing layer, the tabular metal particles are plane-oriented in a range of from 0° to ±30° on average relative to one surface of the metal particle-containing layer (in case where the heat ray shielding material of the present invention has a substrate, relative to the surface of the substrate).

When the thickness of the metal particle-containing layer is referred to as d, at least 80% by number of the hexagonal to circular, tabular metal particles preferably exist in the range of from the surface of the metal particle-containing layer to the depth of d/2 thereof, more preferably in the range of from the surface of the metal particle-containing layer to the depth of d/3 thereof.

Preferably, one surface of the metal particle-containing layer is a flat surface. In case where the metal particle-containing layer of the heat ray shielding material of the present invention has a substrate serving as a temporary support, it is desirable that both the surface of the metal particle-containing layer and the surface of the substrate are nearly horizontal surfaces. Here, the heat ray shielding material may have or may not have the temporary support.

Not specifically defined, the size of the metal particles may be suitably selected in accordance with the intended object thereof. For example, the particles may have a mean particle diameter of at most 500 nm.

Also not specifically defined, the material of the metal particles may be suitably selected in accordance with the intended object thereof. From the viewpoint that the heat ray (near-IR ray) reflectance thereof is high, preferred are silver, gold, aluminum, copper, rhodium, nickel, platinum, etc.

### - 1-2. Tabular Metal Particles -

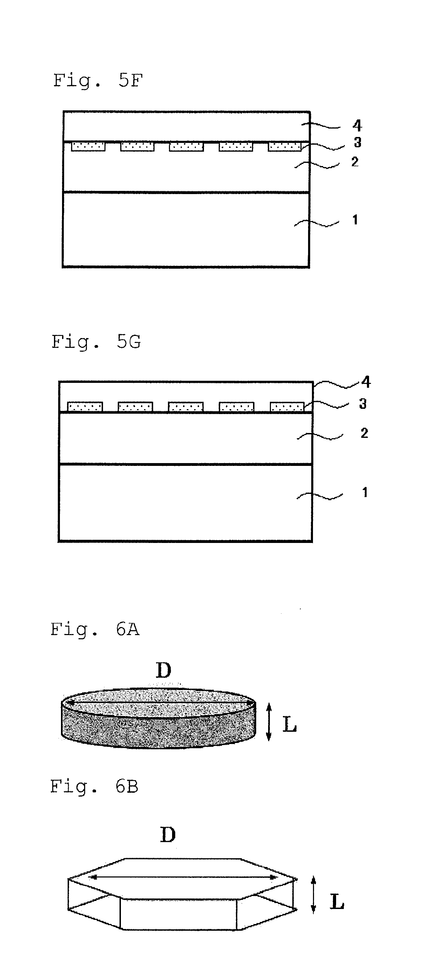

Not specifically defined, the tabular metal particles may be suitably selected in accordance with the intended object thereof so far as they are particles each having two main planes (see Fig. 6A and Fig. 6B). For example, there are mentioned hexagonal, circular, triangular forms, etc. Of those, more preferred are hexagonal or more polygonal to circular forms from the viewpoint of high visible light transmittance thereof. Even more preferred is a hexagonal or circular form.

In this description, the circular form means such a form that, in the metal tabular particles to be mentioned below, the number of the sides thereof having a length of at least 50% of the mean circle-equivalent diameter is 0 (zero) per one tabular metal particle. The circular tabular metal particles are not specifically defined and may be suitably selected in accordance with the intended object thereof, so far as the particles have, when they are observed from the top of the main plane thereof with a transmission electronic microscope (TEM), no angle but have a roundish form.

In this description, the hexagonal form means such a form that the number of the sides thereof having a length of at least 20% of the mean circle-equivalent diameter of the tabular metal particles to be mentioned below is 6 per one tabular metal particle. The same shall apply to the other polygonal forms. The hexagonal tabular metal particles are not specifically defined and may be suitably selected in accordance with the intended object thereof, so far as the particles have, when they are observed from the top of the main plane thereof with a transmission electronic microscope (TEM), a hexagonal form. For example, the angle of the hexagonal form of the particles may be an acute angle or a blunt angle. However, from the viewpoint of the ability of the particles to reduce visible light absorption, the angle is preferably a blunt angle. The degree of the bluntness of the angle is not specifically defined and may be suitably selected in accordance with the intended object thereof.

Not specifically defined, the tabular metal particles may be the same as that of the above-mentioned metal particles and may be suitably selected in accordance with the intended object thereof. Preferably, the tabular metal particles contain silver.

Of the metal particles existing in the metal particle-containing layer, the ratio of the hexagonal to circular, tabular metal particles is at least 60% by number, preferably at least 65% by number, more preferably at least 70% by number relative to the total number of the metal particles contained in the particle-containing layer. When the ratio of the tabular metal particles is less than 60% by number, then the visible light transmittance of the layer would lower.

### - 1-2-1. Plane Orientation -

Preferably, in the heat ray shielding material of the present invention, the main plane of the hexagonal to circular, tabular metal particles is plane-oriented in a range of from 0° to ±30° on average relative to one surface of the metal particle-containing layer (in case where the heat ray shielding material has a substrate, relative to the surface of the substrate), preferably in a range of from 0° to ±20° on average, even more preferably in a range of from 0° to ±10° on average.

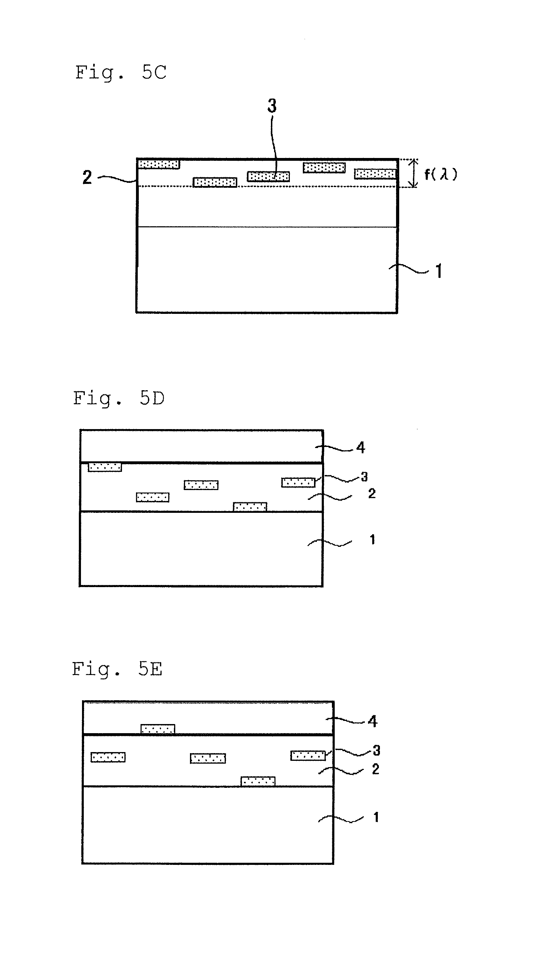

Not specifically defined, the existence condition of the tabular metal particles may be suitably selected in accordance with the intended object thereof, but preferably, the particles are aligned as in Fig. 5F or Fig. 5G to be mentioned hereinunder.

Here, Fig. 5D to Fig. 5F, and Figs. 5B and 5C are schematic cross-sectional views showing the existence condition of the metal particle-containing layer that contains tabular metal particles in the heat ray shielding material of the present invention. Figs. 5D to 5F show the existence condition of the tabular metal particles 3 in the metal particle-containing layer 2. Fig. 5B is a view explaining the angle (±θ) between the plane of the substrate 1 and the plane of the tabular metal particle 3. Fig. 5C shows the existence region in the depth direction of the heat ray shielding material of the metal particle-containing layer 2.

In Fig. 5B, the angle (±θ) between the surface of the substrate 1 and the main plane or the extended line of the main plane of the tabular metal particle 3 corresponds to the predetermined range in the above-mentioned plane orientation. Specifically, the plane orientation means that the tilt angle (±θ) shown in Fig. 5B is small when the cross section of the heat ray shielding material is observed, and in particular as in Fig. 5F, means that the surface of the substrate 1 is kept in contact with the main plane of the tabular metal particles 3, or that is, θ is 0°. When the angle of the plane orientation of the main plane of the tabular metal particle 3 relative to the surface of the substrate 1, or that is, θ shown in Fig. 5B is more than ±30°, then the reflectance at a predetermined wavelength (for example, from the long wavelength side of the visible light region to the near-IR region) of the heat ray shielding material may lower.

Not specifically defined, the mode of evaluation of whether or not the main plane of the tabular metal particle is in plane orientation relative to one surface of the metal particle-containing layer (in case where the heat ray shielding material has a substrate, the surface of the substrate) may be suitably selected in accordance with the object thereof. For example, in one evaluation method employable here, a suitable cross-sectional slice of the heat ray shielding material is prepared, and the metal particle-containing layer (in a case where the heat ray shielding material has a substrate, the substrate) and the tabular metal particles in the slice are observed and evaluated. Concretely, the heat ray shielding material is cut with a microtome or through focused ion beam technology (FIB) to prepare a cross-sectional sample or a cross-sectional slice sample, and this is observed with various types of microscopes (for example, field emission scanning electron microscope (FE-SEM) or the like), and the resulting image is analyzed for the intended evaluation.

In the heat ray shielding material, in case where the binder to cover the tabular metal particles swells in water, then the sample thereof that has been frozen with liquid nitrogen may be cut with a diamond cutter mounted on a microtome to give the cross-sectional sample or the cross-sectional slice sample. On the other hand, in case where the binder to cover the tabular metal particles in the heat ray shielding material does not swell in water, the intended cross-sectional sample or cross-sectional slice sample may be directly prepared from the material.

Not specifically defined, the cross-sectional sample or the cross-sectional slice sample prepared in the manner as above may be observed in any manner suitably selected in accordance with the intended object thereof so far as in the sample, it is possible to confirm whether or not the main plane of the tabular metal particles could be in plane orientation relative to one surface of the metal particle-containing layer (in case where the heat ray shielding material has a substrate, the surface of the substrate). For example, there are mentioned observations with FE-SEM, TEM, optical microscope, etc. The cross-sectional sample may be observed with FE-SEM, and the cross-sectional slice sample may be observed with TEM. In evaluation with FE-SEM, it is desirable that the microscope has a spatial resolving power capable of clearly determining the form of the tabular metal particles and the tilt angle (±θ in Fig. 5B) thereof.

### - 1-2-2. Mean Particle Diameter (mean circle-equivalent diameter) and Particle Diameter Distribution of Mean Particle Diameter (mean circle-equivalent diameter) -

Not specifically defined, the mean particle diameter (mean circle-equivalent diameter) of the tabular metal particles may be suitably selected in accordance with the intended object thereof. Preferably, the mean particle diameter is from 70 nm to 500 nm, more preferably from 100 nm to 400 nm. When the mean particle diameter (mean circle-equivalent diameter) is less than 70 nm, then the contribution of absorption by the tabular metal particles would be larger than that of reflection by the particles and therefore, the material could not ensure sufficient heat ray reflectance; but when more than 500 nm, then the haze (scattering) would increase so that the transparency of the substrate would be thereby lowered.

The mean particle diameter (mean circle-equivalent diameter) means the mean value of the data of the main plane diameter (maximum length) of 200 tabular particles that are randomly selected from the image taken in observation of the particles with TEM.

The metal particle-containing layer may contain two or more different types of metal particles that differ in the mean particle diameter (mean circle-equivalent diameter) thereof; and in such a case, the metal particles may have two or more peaks of the mean particle diameter (mean circle-equivalent diameter) thereof, or that is, the metal particles may have two or more mean particle diameters (mean circle-equivalent diameters).

In the heat ray shielding material of the present invention, preferably, the coefficient of variation of the particle size distribution of the tabular metal particles is at most 30%, more preferably at most 20%. When the coefficient of variation is more than 30%, then the heat ray reflection wavelength range of the heat ray shielding material may broaden.

Here, the coefficient of variation of the particle size distribution of the tabular metal particles is a value (%) calculated, for example, as follows: The distribution range of the particle diameter of 200 tabular metal particles that have been employed for calculation of the mean value as described above is plotted to determine the standard deviation of the particle size distribution, and this is divided by the mean value of the main plane diameter (maximum length) obtained as above (mean particle diameter (mean circle-equivalent diameter)) to give the intended value (%).

### - 1-2-3. Aspect Ratio -

Not specifically defined, the aspect ratio of the tabular metal particles may be suitably selected in accordance with the intended object thereof, and is preferably from 8 to 40, more preferably from 10 to 35 from the viewpoint that the reflectance of the particles in an IR region of from a wavelength 780 nm to a wavelength 1,800 nm could be high. When the aspect ratio is less than 8, then the reflection wavelength would be shorter than 780 nm; and when more than 40, then the reflection wavelength would be longer than 1,800 nm and the material could not secure a sufficient heat ray reflective power.

The aspect ratio means a value calculated by dividing the mean particle diameter (mean circle-equivalent diameter) of the tabular metal particles by the mean particle thickness of the tabular metal particles. The mean particle thickness corresponds to the distance between the main planes of the tabular metal particles; and for example, as shown in Fig. 6A and Fig. 6B, the mean particle thickness may be measured with an atomic force microscope (AFM).

Not specifically defined, the method of measuring the mean particle thickness with AFM may be suitably selected in accordance with the intended object thereof. For example, there is mentioned a method in which a dispersion of particles that contains tabular metal particles is dropped onto a glass substrate and dried thereon, and the thickness of one particle is measured.

In addition, preferably, the thickness of the tabular metal particle is 5 nm to 20 nm.

### - 1-2-4. Existence Region of Tabular Metal Particles

Preferably, in the heat ray shielding material of the present invention, at least 80% by number of the hexagonal to circular, tabular metal particles exist in the range of from the surface to d/2, of the metal particle-containing layer, more preferably in the range to d/3; and even more preferably, at least 60% by number of the hexagonal to circular, tabular metal particles are exposed out of one surface of the metal particle-containing layer.

Here, the existence distribution of the tabular metal particles in the metal particle-containing layer may be measured, for example, on the image taken through SEM observation of a cross-sectional sample of the heat ray shielding material.

Not specifically defined, the plasmon resonance wavelength λ of the metal that constitutes the tabular metal particles in the metal particle-containing layer may be suitably selected in accordance with the intended object thereof, but from the viewpoint of imparting heat ray reflection performance to the layer, the wavelength is preferably from 400 nm to 2,500 nm, and from the viewpoint of imparting visible light transmittance thereto, the wavelength is more preferably from 700 nm to 2,500 nm.

### 1-2-5. Medium in Metal Particle-containing Layer -

Not specifically defined, the medium in the metal particle-containing layer may be suitably selected in accordance with the intended object thereof. Preferably, in the heat ray shielding material of the present invention, the metal-containing layer contains a polymer, more preferably a transparent polymer. The polymer includes various high-molecular substances, for example, polyvinyl acetal resin, polyvinyl alcohol resin, polyvinyl butyral resin, polyacrylate resin, polymethyl methacrylate resin, polycarbonate resin, polyvinyl chloride resin, (saturated) polyester resin, polyurethane resin, and natural polymers such as gelatin, cellulose, etc. Of those, in the present invention, it is desirable that the main polymer of the polymer is a polyvinyl alcohol resin, a polyvinyl butyral resin, a polyvinyl chloride resin, a (saturated) polyester resin or a polyurethane resin. More preferred are a polyester resin and a polyurethane resin from the viewpoint that at least 80% by number of the hexagonal to circular, tabular metal particles could be readily made to exist in the range of from the surface to d/2, of the metal particle-containing layer; and even more preferred is a polyester resin from the viewpoint of further improving the rubbing resistance of the heat ray shielding material of the present invention.

In this description, the main polymer of the polymer contained in the metal-containing layer means the polymer component that accounts for at least 50% by mass of the polymer contained in the metal-containing layer.

The refractive index n of the medium is preferably from 1.4 to 1.7.

Preferably in the heat ray shielding material of the present invention in which when the thickness of the hexagonal to circular, tabular metal particles is referred to as a, at least 80% by number of the hexagonal to circular, tabular metal particles are covered with the polymer in the range of at least a/10 in the thickness direction thereof, more preferably covered with the polymer in the range of from a/10 to 10a in the thickness direction thereof, even more preferably covered with the polymer in the range of from a/8 to 4a. When at least a predetermined proportion of the hexagonal to circular, tabular metal particles are buried in the metal particle-containing layer in the manner as above, then the rubbing resistance of the layer could be further enhanced. Specifically, of the heat ray shielding material of the present invention, the embodiment of Fig. 5F is preferred to the embodiment of Fig. 5G.

### - 1-2-6. Areal Ratio of Tabular Metal Particles -

The areal ratio [(B/A) x 100] that is the ratio of the total area B of the tabular metal particles to the area A of the substrate when the heat ray shielding material is seen from the top thereof (the total projected area A of the metal particle-containing layer when the metal particle-containing layer is seen in the vertical direction thereof) is preferably at least 15%, more preferably at least 20%. When the areal ratio is less than 15%, then the maximum heat ray reflectance of the material may lower and the material could not sufficiently secure the heat shielding effect thereof.

Here, the areal ratio may be measured, for example, by processing the image taken through SEM observation of the substrate of the heat ray shielding material from the top thereof or the image taken through an atomic force microscope (AFM) observation thereof.

### - 1-2-7. Mean Intergranular Distance of Tabular Metal Particles -

The mean intergranular distance of the tabular metal particles that are adjacent to each other in the horizontal direction in the metal particle-containing layer is preferably at least 1/10 of the mean particle diameter of the tabular metal particles from the viewpoint of the visible light transmittance and the maximum heat ray reflectance of the layer.

When the mean intergranular distance in the horizontal direction of the tabular metal particles is less than 1/10 of mean particle diameter of the tabular metal particles, then the visible light transmittance may lower. In addition, when more than 10, then the heat ray reflectance may lower. The mean intergranular distance in the horizontal direction is preferably nonuniform (at random) from the viewpoint of the visible light transmittance of the layer. When the distance is not at random, or that is, when the distance is uniform, a moire fringe may be observed due to diffractive scattering.

Here, the mean intergranular distance in the horizontal direction of the tabular metal particles means a mean value of the intergranular distance data of two adjacent particles. The mean intergranular distance that is at random means that "when a SEM image containing at least 100 tabular metal particles is binarized to provide a two-dimensional autocorrelation of the brightness value, then the result does not have any other significant maximum point than the point of origin".

### - 1-2-8. Layer Configuration of Metal Particle-containing Layer -

In the heat ray shielding material of the present invention, the tabular metal particles are arranged in the form of the metal particle-containing layer that contains the tabular metal particles, as in Fig. 5B, Fig. 5C, and Figs. 5D to 5F.

The metal particle-containing layer may be composed of a single layer as in Fig. 5B, Fig. 5C, and Figs. 5D to 5F, or may be composed of multiple metal particle-containing layers. In case where the metal particle-containing layer is composed of multiple layers, it may be given heat shieldability in accordance with the wavelength range in which the heat shieldability is desired to be given to the layer.

### - 1-2-9. Thickness of Metal Particle-containing Layer

When the thickness of the metal particle is referred to as a, and the mean particle diameter (mean circle-equivalent diameter) is referred to as b, the thickness d of the metal particle-containing layer preferably satisfies a/2≤d≤2b, more preferably a≤d≤b. When the thickness d is too small, then the metal particle-containing layer hardly holds the metal particles and thus the metal particles easily peel off in laminating an upper layer or in transport thereof. On the contrary, when the thickness d is too large, the metal particles tend to be eccentrically located in the surface of the metal particle-containing layer.

Here, the thickness of each metal particle-containing layer may be measured, for example, on the image taken through SEM observation of a cross-sectional sample of the heat ray shielding material.

In case where any other layer, for example, an overcoat layer to be mentioned below is arranged on the metal particle-containing layer of the heat ray shielding material, the boundary between the other layer and the metal particle-containing layer may be determined in the same manner as above, and the thickness d of the metal particle-containing layer may also be determined. In case where the same type of polymer as that of the polymer contained in the metal particle-containing layer is used to form a coating film on the metal particle-containing layer, in general, the boundary between the metal particle-containing layer and the coating film is hardly differentiated, thus carbon is deposited on the metal particle-containing layer, and an overcoat layer is coated thereon. The boundary between both the layers could be determined on the image taken through SEM observation of a cross section thereof, and the thickness d of the metal particle-containing layer could be thereby determined.

### - 1-2-10. Method for Synthesis of Tabular Metal Particles -

Not specifically defined, the method of synthesizing the tabular metal particles may be suitably selected in accordance with the intended object thereof so far as the intended hexagonal to circular, tabular metal particles could be synthesized in the method. For example, there is mentioned a liquid-phase method such as a chemical reduction method, an optochemical reduction method, an electrochemical reduction method or the like. Of those, especially preferred is a liquid-phase method such as a chemical reduction method or an optochemical reduction method from the viewpoint of the form and size controllability thereof. After hexagonal to triangular, tabular metal particles have been synthesized, the particles may be etched with a dissolution species capable of dissolving silver, such as nitric acid or sodium nitrite, then aged by heating or the like to thereby blunt the corners of the hexagonal to triangular, tabular metal particles to give the intended hexagonal to circular, tabular metal particles.

Regarding any other method of synthesizing the tabular metal particles than the above, a seed crystal may be fixed in advance on the surface of a transparent substrate such as film or glass, and then metal particles (for example, Ag) may be crystal-like grown in a tabular form thereon.

In the heat ray shielding material of the present invention, the tabular metal particles may be further processed so as to be given desired characteristics. Not specifically defined, an additional process may be suitably selected in accordance with the intended object thereof. For example, there are mentioned formations of a high-refractivity shell layer, addition of various additives such as dispersant, antioxidant, etc.

### - 1-2-10-1. Formation of High-Refractivity Shell Layer -

The tabular metal particles may be coated with a high-refractivity material having a high visible light transparency for the purpose of further increasing the visible light transparency thereof.

Not specifically defined, the high-refractivity material may be suitably selected in accordance with the object thereof. For example, there are mentioned TiOₓ, BaTiO₃, ZnO, SnO₂, ZrO₂, NbOₓ, etc.

Not specifically defined, the coating method may be suitably selected in accordance with the intended object thereof. For example, employable here is a method of hydrolyzing tetrabutoxytitanium to form a TiOₓ layer on the surface of the tabular metal particles, as reported by Langmuir, 2000, Vol. 16, pp. 2731 to 2735.

In case where a high-refractivity metal oxide layer shell is difficult to form directly on the tabular metal particles, another method may be employable here, in which the tabular metal particles have been synthesized in the manner as mentioned above, then a shell layer of SiO₂ or a polymer is suitably formed thereon, and further the above-mentioned metal oxide layer is formed on the shell layer. In case where TiOₓ is used as a material of the high-refractivity metal oxide layer, TiOₓ having a photocatalyst activity may deteriorate the matrix in which the tabular metal particles are to be dispersed, and in such a case, therefore, an SiO₂ layer may be optionally formed in accordance with the intended object thereof, after the TiOₓ layer has been formed on the tabular metal particles.

### - 1-2-10-2. Addition of Various Additives -

In the heat ray shielding material of the present invention, the tabular metal particles may have, as adsorbed thereon, an antioxidant such as mercaptotetrazole or ascorbic acid for the purpose of preventing the metal such as silver constituting the tabular metal particles from being oxidized. In addition, also for preventing oxidation, an oxidation sacrifice layer of Ni or the like may be formed on the surface of the tabular metal particles. For shielding them from oxygen, the particles may be coated with a metal oxide film of SiO₂ or the like.

For imparting dispersibility to the tabular metal particles, for example, a dispersant such as a low-molecular-weight dispersant, or a high-molecular-weight dispersant that contains at least any of N element, S element and P element, such as quaternary ammonium salts or amines may be added to the tabular metal particles.

### 2. Overcoat Layer

The heat ray shielding material of the present invention has an overcoat layer which is in close contact with the surface of the metal particle-containing layer, and the overcoat layer contains fine particles.

When the heat ray shielding material of the present invention has the overcoat layer, especially in case where the tabular metal particles are eccentrically located in the surface of the metal particle-containing layer, the overcoat layer can prevent the tabular metal particles from peeling away in the production step to cause contamination, and the configuration of the tabular metal particles being disordered in forming any other layer on the metal particle-containing layer, and is thus preferred.

The fine particles may be inorganic fine particles and organic fine particles, but the inorganic fine particles are preferred.

As examples of the inorganic fine particles, there are mentioned oxides (for example, colloidal silica, titanium oxide, magnesium oxide, and aluminum oxide), alkaline earth metal salts (for example, sulfate salts or carbonate salts, and concretely, barium sulfate, calcium carbonate, magnesium sulfate, strontium sulfate, calcium carbonate, and the like), silver halide particles in which an image is not formed, glass, or the like. Further, inorganic particles may be used, disclosed in U. S. Patent Nos. 3,053,662, 3,062,649, 3,257,206, 3,322,555, 3,353,958, 3,370,951, 3,411,907, 3,437,484, 3,523,022, 3, 615, 554, 3,635,714, 3,769,020, 4,021,245, 4,029,504, and the like. Of the inorganic fine particles, colloidal silica, titanium oxide, barium sulfate, silver halide, and the like are preferred, and colloidal silica is especially preferred. As specific examples of colloidal silica, there are mentioned commercial products having trade names such as Ludox AM, Ludox AS, Ludox LS, and Ludox HS by E. I. du pont de Nemours & Co. (USA), trade names such as Snowtex 20, Snowtex C, Snowtex N, and Snowtex 0 by Nissan Chemical (Tokyo, Japan), trade names such as Syton C-30 and Syton-200 by Monsant Co. (USA), trade names such as Nalcoag 1030, Nalcoag 1060, and Nalcoag ID-21-64 by Nalco Chem. Co. (USA), and trade names such as Seahostar KE-W10, KE-W30, and KE-W50 by Nippon Shokubai. In addition, also used is tin dioxide-antimony compound needle-like metal oxide aqueous dispersion which is commercially available under the trade name of FS-10D manufactured by Ishihara Sangyo Kaisha.

As the organic fine particles, aqueous dispersion polymers (latex) are preferably used, and, for example, there are mentioned esters of acrylic acid or methacrylic acid, particularly, polymers containing alkyl groups having 1 to 10 carbon atoms, such as methyl, ethyl, n-propyl, isopropyl, n-butyl, isobutyl, t-butyl, hexyl, 2-ethylhexyl, heptyl and n-octyl; copolymers of unsaturated carboxylic acid component such as acrylic acid, methacrylic acid, fumaric acid, itaconic acid, and maleic acid therewith; and acrylonitrile, methacrylonitrile, halo-substituted acrylonitrile, halogen substituted methacrylonitrile, acrylamide, methacrylamide, N-methylol acrylonitrile, N-ethanol acrylamide, N-methyl acrylamide, N-propanol acrylamide, N-methylol methacrylamide, N-t-butyl acrylamide, hydroxyethyl acrylate, methacrylic acid hydroxyethyl, glycidyl acrylate, glycidyl methacrylate, fumaric acid, itaconic acid, maleic acid, itaconic anhydride, maleic anhydride, half esters of itaconic acid, and the like. As monomers which can be optionally used together, there are mentioned vinyl esters such as vinyl acetate, vinyl chloroacetate, and vinyl benzoate, vinyl pyridine, vinyl chloride, butadien, and the like. Such an aqueous dispersion polymer can be obtained by dispersing the mixture of the monomers in water with a surfactant and then polymerizing the dispersed mixture with a typical radical initiator.

The mean particle diameter of the fine particles is preferably from 5 nm to 1500 nm, more preferably from 5 nm to 900 nm, and even more preferably from 5 nm to 300 nm. For use in the heat ray shielding material, general fine particles which are exposed to the overcoat layer scatter light which tends to increase the haze, and thus preferably the haze is reduced by using a limited particle size.

The mass ratio of the fine particles in the overcoat layer to the binder is preferably from 0.02 to 0.4, more preferably from 0.02 to 0.3, and even more preferably from 0.02 to 0.2.

Not specifically defined except for containing the fine particles, the overcoat layer may be suitably selected in accordance with the intended object thereof. For example, the layer contains a binder, a mat agent, a crosslinking agent, a slipping agent, a surface stain-proofing agent, a refractive index regulating agent, and a surfactant, in addition to the fine particles, and may optionally contain any other component.

Not specifically defined, the binder may be suitably selected in accordance with the intended object thereof. For example, there are mentioned thermosetting or thermocurable resins such as acrylic resin, silicone resin, melamine resin, urethane resin, alkyd resin, fluororesin, etc. In addition, the binder exemplified in the UV absorbent layer may also be used. A function as an overcoat layer may be additionally imparted to a functional layer such as a UV absorbent layer, an adhesive layer, or a hard coat layer to be mentioned below.

The thickness of the overcoat layer is preferably from 100 nm to 2000 nm, more preferably from 100 nm to 2000 nm, and even more preferably from 150 nm to 2000 nm. When the overcoat layer containing the fine particles is given, a thin film which is about 100 nm thick is generally preferred in consideration of an amount of a material to be used and the surface roughness. Although an interface occurs between the formed overcoat layer and an adhesive layer, the thickness of the overcoat layer is preferably at least 150 nm from the viewpoint of preventing characteristic peak reflection from being reduced due to addition of light interference to a reflection spectrum of the tabular metal particles. However, this is except for a case where a refractive index of the adhesive layer matches a refractive index of the overcoat layer. On the other hand, bar coating is advantageous in minimizing manufacturing costs, and thus the thickness of a dried film of the overcoat layer is preferably at most 2000 nm in consideration of general corresponding viscosity of the coating and wet coating amount.

### 4. Substrate

Preferably, the heat ray shielding material of the present invention further has a substrate on the surface opposite to the surface of the metal particle-containing layer on which the overcoat layer is disposed.

Not specifically defined, the substrate may be any optically transparent substrate, and may be suitably selected in accordance with the intended object thereof. For example, there are mentioned one having a visible light transmittance of at least 70%, preferably at least 80%, and one having a high near-IR transmittance.

The substrate is not specifically defined in point of the shape, structure, size, material and others thereof, and may be suitably selected in accordance with the intended object thereof. The shape may be, for example, tabular; the structure may be a single-layer structure or a laminate layer structure; and the size may be suitably selected in accordance with the size of the heat ray shielding material.

Not specifically defined, the material of the substrate may be suitably selected in accordance with the intended object thereof. For example, there are mentioned films formed of a polyolefin resin such as polyethylene, polypropylene, poly-4-methylpentene-1, polybutene-1, etc.; a polyester resin such as polyethylene terephthalate, polyethylene naphthalate, etc.; a polycarbonate resin, a polyvinyl chloride resin, a polyphenylene sulfide resin, a polyether sulfone resin, a polyethylene sulfide resin, a polyphenylene ether resin, a styrene resin, an acrylic resin, a polyamide resin, a polyimide resin, a cellulose resin such as cellulose acetate, etc.; as well as laminate films formed of such films. Of those, especially preferred is a polyethylene terephthalate film.

Not specifically defined, the thickness of the substrate may be suitably selected in accordance with the intended use object of the solar shielding film. In general, the thickness may be from 10 µm to 500 µm or so, but may be preferably thinner from the viewpoint of thinning a film. The thickness of the substrate is preferably from 10 µm to 100 µm, more preferably from 20 µm to 75 µm, and even more preferably from 35 µm to 75 µm. When the substrate becomes thinner, then the strength of the heat ray shielding material is not sufficient, or adhesion failure tends to occur. However, when the fine particles with the preferred particle size defined in the present invention are used in the overcoat layer, the adhesion failure can lower even in case of using a thin substrate. In addition, when the substrate becomes thicker, then the material has large elasticity and tends to make it difficult to construct when stuck to building materials or automobiles as the heat ray shielding material. When the substrate becomes thicker, then the visible light transmittance is reduced, and the cost of raw materials tends to increase.

### 5. Metal Oxide Particle-containing Layer

For absorbing long-wave IR rays and from the viewpoint of the balance between the heat ray shieldability and the production cost thereof, the heat ray shielding material of the present invention preferably further has a metal oxide particle-containing layer that contains at least one kind of metal oxide particle. In the heat ray shielding material of the present invention, the metal oxide particle-containing layer is preferably located on the surface side opposite to the surface of the metal particle-containing layer on the side where the hexagonal to circular, tabular metal particles of the metal particle-containing layer are exposed. In this case, for example, the metal oxide particle-containing layer may be laminated on the metal particle-containing layer via a substrate. In case where the heat ray shielding material of the present invention is so configured that the metal particle-containing layer 2 could be on the side to receive heat rays such as solar light, the metal particle-containing layer could reflect some (or optionally all) of the heat rays given thereto may be reflected and the metal oxide particle-containing layer could absorb some of the heat rays, and as a result, the heat quantity as a total of the heat quantity which the heat ray shielding material directly receives inside it owing to the heat rays not absorbed by the metal oxide particle-containing layer but having run into the heat ray shielding material and the heat quantity absorbed by the metal oxide particle-containing layer of the heat ray shielding material and indirectly transferred to the inside of the heat ray shielding material could be thereby reduced.

Not specifically defined, the metal oxide particle-containing layer may be suitably selected in accordance with the intended object thereof so far as the layer contains at least one kind of metal oxide particle.

Not specifically defined, the material for the metal oxide particles may be suitably selected in accordance with the intended object thereof. For example, there are mentioned tin-doped indium oxide (hereinafter abbreviated to "ITO"), tin-doped antimony oxide (hereinafter abbreviated to "ATO"), zinc oxide, titanium oxide, indium oxide, tin oxide, antimony oxide, glass ceramics, etc. Of those, more preferred are ITO, ATO and zinc oxide from the viewpoint of having excellent heat ray absorbability and being capable of producing a heat ray shielding material having broad-range heat ray absorbability when combined with the tabular metal particles. Especially preferred is ITO from the viewpoint of being capable of blocking at least 90% of IR rays of 1, 200 nm or longer and having the visible light transmittance of at least 90%.

Preferably, the volume-average particle diameter of the primary particles of the metal oxide particles is at most 0.1 µm in order not to reduce the visible light transmittance of the particles.

Not specifically defined, the shape of the metal oxide particles may be suitably selected in accordance with the intended object thereof. For example, the particles may be spherical, needle-like, tabular or the like.

Not specifically defined, the content of the metal oxide particles in the metal oxide particle-containing layer may be suitably selected in accordance with the intended object thereof. For example, the content is preferably from 0.1 g/m² to 20 g/m², more preferably from 0.5 g/m² to 10 g/m², and even more preferably from 1.0 g/m² to 4.0 g/m^{2.}

When the content is less than 0.1 g/m², then the amount of sunshine which could be felt on skin may increase; and when more than 20 g/m², then the visible light transmittance of the layer may worsen. On the other hand, when the content is from 1.0 g/m² to 4.0 g/m², it is advantageous since the above two problems could be overcome.

The content of the metal oxide particles in the metal oxide particle-containing layer may be determined, for example, as follows: The TEM image of an ultra-thin section of the heat ray shielding layer and the SEM image of the surface thereof are observed, the number of the metal oxide particles in a given area and the mean particle diameter thereof are measured, and the mass (g) calculated on the basis of the number and the mean particle diameter thereof and the specific gravity of the metal oxide particles is divided by the given area (m²) to give the content. In a different way, the metal oxide fine particles in a given area of the metal oxide particle-containing layer are dissolved out in methanol, and the mass (g) of the metal oxide particles is measured through fluorescent X-ray determination, and is divided by the given area (m²) to give the content.

### 6. UV Absorbent Layer

Not specifically defined, the UV absorbent layer may be suitably selected in accordance with the intended object thereof so far as the layer contains at least one kind of UV absorbent, and may be an adhesive layer, or a layer between the adhesive layer and the metal particle-containing layer (for example, an overcoat layer, a substrate, intermediate layers other than those, and the like). In any case, it is preferable that the UV absorbent layer be added to the layer to be arranged on the side to be exposed to sunlight relative to the metal particle-containing layer.

In case where the UV absorbent layer forms an intermediate layer which is neither an adhesive layer nor a substrate, the UV absorbent layer contains at least one kind of UV absorbent, and may optionally contain any other component such as a binder. The heat ray shielding material of the present invention preferably has the UV absorbent layer on the surface side of the metal particle-containing layer of the side where the hexagonal to circular, tabular metal particles are exposed. In this case, an overcoat layer, described later, and the UV absorbent layer may be the same as or different from each other. Concretely, preferred is an embodiment of the heat ray shielding material of the present invention in which the overcoat layer is a layer between the UV absorbent layer and the metal particle-containing layer, and also preferred is an embodiment in which the overcoat layer is the UV absorbent layer.

### - 6-1. UV Absorbent -

Not specifically defined, the UV absorbent may be suitably selected in accordance with the intended object thereof. For example, there are mentioned benzophenone-type UV absorbent, benzotriazole-type UV absorbent, triazine-type UV absorbent, salicylate-type UV absorbent, cyanoacrylate-type UV absorbent, etc. One or more of these may be used here either singly or as combined.

Not specifically defined, the benzophenone-type UV absorbent may be suitably selected in accordance with the intended object thereof. For example, there are mentioned 2,4-dihydroxy-4-methoxy-5-sulfobenzophenone, etc.

Not specifically defined, the benzotriazole-type UV absorbent may be suitably selected in accordance with the intended object thereof. For example, there are mentioned 2-(5-chloro-2H-benzotriazol-2-yl)-4-methyl-6-tert-butylphenol (Tinuvin 326), 2-(2-hydroxy-5-methylphenyl)benzotriazole, 2-(2-hydroxy-5-tertiary butylphenyl)benzotriazole, 2-(2-hydroxy-3-5-di-tertiary butylphenyl)-5-chlorobenzotriazole, etc.

Not specifically defined, the triazine-type UV absorbent may be suitably selected in accordance with the intended object thereof. For example, there are mentioned mono(hydroxyphenyl)triazine compounds, bis(hydroxyphenyl)triazine compounds, tris(hydroxyphenyl)triazine compounds, etc.

The mono(hydroxyphenyl)triazine compound includes, for example, 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-(2,4-dihydroxyphenyl)-4,6-bis(2,4-dimethylphenyl)-1,3,5-triazine, 2-(2-hydroxy-4-isooctyloxyphenyl-4,6-bis(2,4-dimethylphenyl)-1,3,5-triazine, 2-(2-hydroxy-4-dodecyloxyphenyl)-4,6-bis(2,4-dimethylphenyl)-1,3,5-triazine, etc. The bis(hydroxyphenyl)triazine compound includes, for example, 2,4-bis(2-hydroxy-4-propyloxyphenyl)-6-(2,4-dimethylphenyl)-1,3,5-triazine, 2,4-bis(2-hydroxy-3-methyl-4-propyloxyphenyl)-6-(4-methylphenyl)-1,3,5-triazine, 2,4-bis(2-hydroxy-3-methyl-4-hexyloxyphenyl)-6-(2,4-dimethylphenyl)-1,3,5-triazine, 2-phenyl-4,6-bis[2-hydroxy-4-[3-(methoxyheptaethoxy)-2-hydroxypropyloxy]phenyl]-1,3,5-triazine, etc. The tris(hydroxyphenyl)triazine compound includes, for example, 2,4-bis(2-hydroxy-4-butoxyphenyl)-6-(2,4-dibutoxyphenyl)-1,3,5-triazine, 2,4,6-tris(2-hydroxy-4-octyloxyphenyl)-1,3,5-triazine, 2,4,6-tris[2-hydroxy-4-(3-butoxy-2-hydroxypropyloxy)phenyl]-1,3,5-triazine, 2,4-bis[2-hydroxy-4-[1-(isooctyloxycarbonyl)ethoxy]phenyl]-6-(2,4-dihydroxyphenyl)-1,3,5-triazine, 2,4,6-tris[2-hydroxy-4-[1-(isooctyloxycarbonyl)ethoxy]phenyl]-1,3,5-triazine, 2,4-bis[2-hydroxy-4-[1-(isooctyloxycarbonyl)ethoxy]phenyl]-6-[2,4-bis[1-(isooctyloxycarbonyl)ethoxy]phenyl-1,3,5-triazine, etc.

Not specifically defined, the salicylate-type UV absorbent may be suitably selected in accordance with the intended object thereof. For example, there are mentioned phenyl salicylate, p-tert-butylphenyl salicylate, p-octylphenyl salicylate, 2-ethylhexyl salicylate, etc.

Not specifically defined, the cyanoacrylate-type UV absorbent may be suitably selected in accordance with the intended object thereof. For example, there are mentioned 2-ethylhexyl-2-cyano-3,3-diphenyl acrylate, ethyl-2-cyano-3,3-diphenyl acrylate, etc.

### - 6-2. Binder -

Not specifically defined, the binder used in the UV absorbent layer may be suitably selected in accordance with the intended object thereof, but is preferably one having high visible light transparency and solar transparency. For example, there are mentioned acrylic resin, polyvinyl butyral, polyvinyl alcohol, etc. When the binder absorbs heat rays, then the reflection effect of the tabular metal particles may be thereby weakened, and therefore, it is desirable that, for the UV absorbent layer to be formed between a heat ray source and the tabular metal particles, a material not having an absorption in the region of from 450 nm to 1,500 nm is selected and the thickness of the UV absorbent layer is reduced.

The thickness of the UV absorbent layer is preferably from 0.01 µm to 1,000 µm, more preferably from 0.02 µm to 500 µm. When the thickness is less than 0.01 µm, then the UV absorption would be poor; and when more than 1,000 µm, then the visible light transmittance may lower.

The content of the UV absorbent layer varies, depending on the UV absorbent layer to be used, and therefore could not be indiscriminately defined. Preferably, the content is suitably so as to be defined as to give a desired UV transmittance to the heat ray shielding material of the present invention.

The UV transmittance is preferably at most 5%, more preferably at most 2%. When the UV transmittance is more than 5%, then the color of the metal particle-containing layer would be changed by the UV rays of sunlight.

### 7. Other Layers

### 7-1. Adhesive Layer

Preferably, the heat ray shielding material of the present invention has an adhesive layer. The adhesive layer may be the overcoat layer, an adhesive layer having a function of the UV absorbent layer, and an adhesive layer which does not contain the UV absorbent.

Not specifically defined, the material usable for forming the adhesive layer may be suitably selected in accordance with the intended object thereof. For example, there are mentioned polyvinyl butyral (PVB) resin, acrylic resin, styrene/acrylic resin, urethane resin, polyester resin, silicone resin, etc. One or more of these may be used here either singly or as combined. The adhesive layer made of such a material may be formed through coating.

Further, an antistatic agent, a lubricant agent, an antiblocking agent or the like may be added to the adhesive layer.

Preferably, the thickness of the adhesive layer is from 0.1 µm to 10 µm.

### - 7-2. Hard Coat Layer -

For imparting scratch resistance thereto, preferably, the heat ray shielding material has a hard coat layer having hard coatability.

Not specifically defined, the hard coat layer may be suitably selected in point of the type thereof and the formation method for the layer, in accordance with the intended object thereof. For example, there are mentioned thermosetting or photosetting resins such as acrylic resin, silicone resin, melamine resin, urethane resin, alkyd resin, fluororesin, etc. Not specifically defined, the thickness of the hard coat layer may be suitably selected in accordance with the intended object thereof. Preferably, the thickness is from 1 µm to 50 µm. Further forming an antireflection layer and/or an antiglare layer on the hard coat layer is preferred, since a functional film having an antireflection property and/or an antiglare property in addition to scratch resistance may be obtained. The hard coat layer may contain the above-mentioned metal oxide particles.

### - 7-3. Protective Layer -

The heat ray shielding material of the present invention may have a protective layer other than the overcoat layer for the purpose of improving the adhesion with the substrate or protecting the material in terms of mechanical strength.

Not specifically defined, the protective layer may be suitably selected in accordance with the intended object thereof. For example, the protective layer may contain, for example, a binder and a surfactant, and may optionally contain any other component. Not specifically defined, the binder may be suitably selected in accordance with the intended object thereof, and may use the binder exemplified in the above-mentioned UV absorbent layer.

### <Method of Producing Heat Ray Shielding Material>

Not specifically defined, the method of producing the heat ray shielding material of the present invention may be suitably selected in accordance with the intended object thereof. For example, there is mentioned a coating method of forming the above-mentioned metal particle-containing layer, the above-mentioned overcoat layer and optionally other layers on the surface of the above-mentioned substrate.

### - Method of Forming Metal Particle-containing Layer -

Not specifically defined, the method of forming the metal particle-containing layer of the present invention may be suitably selected in accordance with the intended object thereof. For example, there are mentioned a method of coating a dispersion containing the above-mentioned tabular metal particles onto the surface of the underlying layer such as the above-mentioned substrate with a dip coater, a die coater, a slit coater, a bar coater, a gravure coater or the like, and a method of plane orientation according to an LB membrane method, a self-assembly method, a spray coating method or the like. Of those, preferred is the method of using the bar coater. In producing the heat ray shielding material of the present invention, a composition of the metal particle-containing layer used in Examples to be given hereinunder is prepared, and then a latex or the like is added thereto in order that at least 80% by number of the above-mentioned hexagonal to circular, tabular metal particles preferably exist in the range of from the surface of the metal particle-containing layer to d/2 thereof, and more preferably to d/3. The amount of the latex to be added is not specifically defined. For example, the latex is preferably added in an amount of from 1% to 10000% by mass relative to the tabular metal particles.

A method of forming the above-mentioned metal particle-containing layer may include a method of plane orientation using electrostatic interaction for the purpose of increasing adsorption performance of the tabular metal particles onto the substrate surface or the plane orientation. The method may include, for example, a method of charging the surface of the substrate to a positive polarity (for example, of modifying the substrate surface with an amino group or the like) in case where the surface of the tabular metal particles is charged to a negative polarity (for example, a state in which the tabular metal particles are dispersed in a negative-charged medium such as a citric acid) so as to electrostatically increase plane orientation, thereby giving plane orientation. In case where the surface of the tabular metal particle is hydrophilic, a hydrophilic/hydrophobic sea-island structure is formed on the surface of the substrate in a block copolymer method or a µ contact stamp method, and the plane orientation and the intergranular distance of the tabular metal particles may be controlled by using hydrophilic/hydrophobic interaction.

If desired, the plane orientation of the tabular metal particles may be promoted by pressing with a pressure roller, such as a calendar roller, a lamination roller or the like after the coating.

### - Method of Forming Overcoat Layer -

A method of forming the overcoat layer is not specifically defined, for which is suitably employable any known method in accordance with the intended object thereof so far as the overcoat layer contains at least one kind of fine particle. Preferably, the overcoat layer is formed by coating. The coating method is not specifically defined, for which is employable any known method. For example, there is mentioned a method of coating with a dispersion that contains the above-mentioned UV absorbent by the use of a dip coater, a die coater, a slit coater, a bar coater, a gravure coater or the like. Of those, preferred is the coating method using the bar coater. In case where the overcoat layer is an adhesive layer, a method of forming an adhesive layer to be mentioned below, at least one kind of fine particle is contained therein to form the overcoat layer, and an adhesive layer of a commercial product containing the fine particles may be used.

### - Method of Forming Other Layers -

### (Method of Forming UV Absorbent Layer)

A method of forming the UV absorbent layer is not specifically defined, for which is suitably employable any known method in accordance with the intended object thereof so far as the UV absorbent layer contains at least one kind of UV absorbent. In case where the UV absorbent layer is an adhesive layer, a method of forming an adhesive layer to be mentioned below, at least one kind of UV absorbent is contained therein to form the UV absorbent layer, and an adhesive layer of a commercial product containing the UV absorbent may be used.

In addition, in case where the UV absorbent layer is a substrate, at least one kind of UV absorbent is contained in the above-mentioned material of the substrate to form the UV absorbent layer, and an substrate of a commercial product containing the UV absorbent may be used. The commercial product may include, for example, a UV absorbent PET film such as Teijin (registered trademark) and Tetoron (registered trademark) film (by Teijin DuPont Films Japan Limited).

In case where the UV absorbent layer is an intermediate layer which is neither an adhesive layer nor a substrate, the UV absorbent layer is preferably formed by coating. The coating method is not specifically defined, for which is employable any known method. For example, there is mentioned a method of coating with a dispersion that contains the above-mentioned UV absorbent by the use of a dip coater, a die coater, a slit coater, a bar coater, a gravure coater or the like.

### (Method of Forming Adhesive Layer)

Preferably, the adhesive layer is formed by coating. For example, the adhesive layer may be laminated on the surface of the underlying layer such as the above-mentioned substrate, the above-mentioned metal particle-containing layer, or the above-mentioned UV absorbent layer. The coating method is not specifically defined, for which is employable any known method.

### - Lamination of Adhesive Layer through Dry Lamination

In case where the heat ray shielding material film of the present invention is used for imparting functionality to existing windowpanes or the like, the film may be stuck to the indoor side of the windowpanes by laminating thereon via an adhesive. In such a case, it is desirable that the reflection layer is made to face as much as possible the sunlight side because the heat generation could be prevented, and therefore it is suitable that an adhesive layer is laminated on the metal particle-containing layer and the material is stuck to a windowpane via the adhesive layer.

In laminating the adhesive layer onto the surface of the metal particle-containing layer, an adhesive-containing coating liquid may be directly applied onto the surface thereof; however, various additives contained in the adhesive as well as the plasticizer and the solvent to be used may disturb the alignment of the metal particle-containing layer or may deteriorate the tabular metal particles themselves. To minimize such problems, it would be effective to employ dry lamination in which an adhesive is previously applied onto a release film and dried thereon to prepare an adhesive film, and the adhesive surface of the resulting film is laminated to the surface of the metal particle-containing layer of the film of the present invention.

### [Laminate Structure]

There can be produced a laminate structure of the present invention by laminating the heat ray shielding material of the present invention with any of glass or plastic.

Not specifically defined, the production method may be suitably selected in accordance with the intended object thereof. There is mentioned a method of sticking the heat ray shielding material as produced in the manner as above to glass or plastic for vehicles such as automobiles or the like, or to glass or plastic for buildings.

### [Use Mode of Heat Ray Shielding Material and Laminate Structure]

The heat ray shielding material of the present invention may be used in any mode of selectively reflecting or absorbing heat rays (near-IR rays), and not specifically defined, the mode of using the material may be suitably selected in accordance with the intended object thereof. For example, there are mentioned a film or a laminate structure for vehicles, a film or a laminate structure for buildings, a film for agricultural use, etc. Of those, preferred are a film or a laminate structure for vehicles and a film or a laminate structure for buildings, from the viewpoint of the energy-saving effect thereof.

In the present invention, the heat rays (near-IR rays) mean near-IR rays (from 780 nm to 1,800 nm) that are contained in a ratio of about 50% in sunlight.

### EXAMPLES

Hereinafter, Examples of the present invention and Comparative Examples will be described, but the present invention is not limited to the Examples. In addition, the Comparative Examples cannot be said to be well-known techniques.

In the following Examples, the material used, its amount and ratio, the details of the treatment and the treatment process may be suitably modified or changed not overstepping the spirit and the scope of the present invention. Accordingly, the scope of the present invention should not be limitatively interpreted by the Examples mentioned below.

### [Production Example 1]: Preparation of Silver Tabular Particle Dispersion B1

### - Synthesis of Tabular Metal Particles -

2.5 mL of an aqueous 0.5 g/L polystyrenesulfonic acid solution was added to 50 mL of an aqueous 2.5 mmol/L (2.5 mM) sodium citrate solution, and heated up to 35°C. 3 mL of an aqueous 10 mmol/L sodium borohydride solution was added to the above solution, and with stirring, 50 mL of an aqueous 0.5 mmol/L silver nitrate solution was added thereto at a rate of 20 mL/min. The resulting solution was stirred for 30 minutes to prepare a seed solution.

87.1 mL of ion-exchanged water was added to 132.7 mL of an aqueous 2.5 mmol/L sodium citrate solution in a reactor, and heated up to 35°C. 2 mL of an aqueous 10 mmol/L ascorbic acid solution was added to the solution in the reactor, 42.4 mL of the seed solution was added thereto, and with stirring, 79.6 mL of an aqueous 0.5 mmol/L silver nitrate solution was added thereto at a rate of 10 mL/min. After this was stirred for 30 minutes, 71.1 mL of an aqueous 0.35 mol/L potassium hydroquinonesulfonate solution was added to the reactor, and 200 g of an aqueous 7 mass% gelatin solution was added to the reactor. A white precipitate mixture liquid of silver sulfite prepared by mixing 107 mL of an aqueous 0.25 mol/L sodium sulfite solution and 107 mL of an aqueous 0.47 mol/L silver nitrate solution was added to the solution in the reactor. Immediately after the addition of the white precipitate mixture liquid, 72 mL of an aqueous 0.17 mol/L NaOH solution was added to the reactor. In this stage, the addition speed of the aqueous NaOH solution was controlled so that the pH of the system could not be over 10. This solution was stirred for 300 minutes to give the tabular silver particle dispersion A.

It was confirmed that in the tabular silver particle dispersion, hexagonal tabular particles of silver (hereinafter referred to as hexagonal tabular silver particles) having a mean circle-equivalent diameter of 200 nm were formed. The thickness of the hexagonal tabular particles was measured and was 12 nm on average with an atomic force microscope (NanocuteII made by Seiko Instruments). It was found that tabular particles having an aspect ratio of 16.7 were formed.

800 mL of the tabular silver particles dispersion A was maintained at 40°C, the pH was adjusted to 10 by using 1 N NaOH and/or a 1 N sulfuric acid. An insoluble dispersant, phenylmercaptotetrazole (by Wako Pure Chemical Industries; trade name: 5-Mercapto-1-Phenylmercaptotetrazole) was further added thereto, and was stirred for 10 minutes. The addition amount thereof was 1.0% in the mole ratio to silver. This underwent centrifugal separation by a centrifugal separator (Hitach Koki's himac CR-GIII, angle rotor) at 9000 rpm for 60 minutes, and 760 mL of the supernatant was removed. The settled tabular silver particles were moved to the vessel of the tabletop homogenizer (SpinMix08 made by Mitsui Electric), and 160 mL of an aqueous 0.2 mmol/L NaOH solution was added thereto, so as to be dispersed at 12000 rpm for 20 minutes. 200 mL of an aqueous 0.2 mmol/L NaOH solution was added to the obtained dispersion, which was a tabular silver particles dispersion B1 of Production Example 1.

### [Production Example 2]: Preparation of Coating Liquid 1 for Metal Particle-containing Layer Use

Coating liquid 1 for metal particle-containing layer use with the following composition was prepared.

Composition of Coating liquid 1 for metal particle-containing layer use:

| | |
|---|---|
| Polyester aqueous solution: Plascoat Z687 | |
| (by Goo Chemical, concentration 25% by mass as solid content) | 1.85 mass parts |
| Crosslinking agent A: Carbodilite V-02-L2 | |
| (by Nisshinbo Holdings, concentration 20% by mass as solid content) | 1.15 mass parts |
| Crosslinking agent B: Epocros K-2020E | |
| (by Nippon Shokubai, concentration 20% by mass as solid content) | 0.51 mass parts |
| Surfuctant A: F Lipal 8780P | |
| (by Lion, 1% by mass as solid content) | 0.96 mass parts |
| Surfuctant B: Naroacty CL-95 | |
| (by Sanyo Chemical, 1% by mass as solid content) | 1.18 mass parts |
| Tabular silver particles dispersion B1 | 32.75 mass parts |
| 1-(5-Methylureidophenyl)-5-Mercaptotetrazole | |
| (by Wako Pure Chemical, 2% by mass as solid content) | 0.62 mass parts |
| Water | 30.97 mass parts |
| Methanol | 30 mass parts |

### [Production Example 3]: Preparation of Coating Liquid 2 for Overcoat Layer Use

Coating liquid 2 for overcoat layer use with the following composition was prepared.

Composition of Coating liquid 2 for overcoat layer use:

| | |
|---|---|
| Fine particles: | 4.62 mass parts |
| (Colloidal silica, mean particle diameter 40 nm, trade name snowtex XL made by Nissan Chemical, and 10% by mass as solid content) | |
| Acryl polymer water dispersion: AS563A | |
| (by Daicel FineChem, 27.5% by mass as solid content) | 1.42 mass parts |
| Wax: Cellosol 524 | |
| (by Chukyo Yushi, 3% by mass as solid content) | 8.36 mass parts |
| Crosslinking agent: Carbodilite V-02-L2 | |
| (by Nisshinbo Holdings, concentration 20% by mass as solid content) | 4.98 mass parts |
| Surfactant A: F Lipal 8780P | |
| (by Lion, 1% by mass as solid content) | 6.76 mass parts |
| Surfactant B: Naroacty CL-95 | |
| (by Sanyo Chemical, 1% by mass as solid content) | 9.4 mass parts |
| Urethane polymer aqueous solution: Olester UD350 | |
| (by Mitsui Chemicals, 38% by mass as solid content) | 12.09 mass parts |
| Water | 52.37 mass parts |

### [Production Example 4]: Preparation of Coating Liquid 3 for Metal oxide Particle-containing Layer Use

Coating liquid 3 for metal oxide particle-containing layer use with the following composition was prepared.

Composition of Coating liquid 3 for metal oxide particle-containing layer use:

| | |
|---|---|
| Modified polyvinyl alcohol PVA203 (by Kuraray) | 10 mass parts |
| Water | 371 mass parts |
| Methanol | 119 mass parts |
| ITO particles (by Mitsubishi Materials) | 35 mass parts |

### [Example 1]

### <Production of Heat Ray Shielding Material>

Coating liquid 1 for metal particle-containing layer use was coated on a surface of a PET film (by Toyobo, A4300, thickness: 50 µm) by using a wire bar so that the mean thickness after being dried was 80 nm. Then, the liquid was heated, dried, and solidified at 130°C for 1 minute, to form a metal particle-containing layer.

Next, Coating liquid 2 for overcoat layer use was coated on the formed metal particle-containing layer by using a wire bar so that the mean thickness after being dried was 340 nm. Then, the liquid was heated, dried, and solidified at 130°C for 1 minute, to form an overcoat layer.

Next, Coating liquid 3 for metal oxide particle-containing layer use was coated on a rear surface of the formed overcoat layer, or that is, the surface of the PET film on which Coating liquid 1 was not coated by using a wire bar so that the mean thickness after being dried was 1. 5 µm.

Next, a UV curable resin A (by JSR, Z7410B, the refractive index 1.65) was coated on the surface on which Coating liquid 3 for metal oxide particle-containing layer use was coated, in the layer thickness of about 9 µm, to provide a coating layer, and then the coating layer was dried at 70°C for 1 minute. Then, the dried coating layer was irradiated with ultraviolet rays by a high pressure mercury lamp, to cure the resin, thereby forming a hard coat layer which was 3 µm thick on the metal oxide particle-containing layer. The irradiation amount of the ultraviolet rays on the coating layer was 1,000 mJ/cm².

The mean thickness was measured with a difference between before and after the coating by using a laser microscope (VK-8510, made by Keyence), and ten thicknesses may be averaged to give the thickness.

### (Sticking of Adhesive Layer)

The surface of the thus-obtained heat ray shielding film was washed, and an adhesive layer was stuck thereto. As the adhesive agent, Sanritz's PET-W was used. The release sheet was peeled from one side of PET-W, and the surface was then stuck to the overcoat layer surface of the heat ray shielding film.

According to the above process, there was produced a heat ray shielding material of Example 1.

### (Confirmation of Particle Tilt Angle of Metal Particle-containing Layer)

The heat ray shielding material was buried in an epoxy resin and frozen with liquid nitrogen. This was cut with a razor in the vertical direction to prepare a vertical cross-sectional sample of the material. The vertical cross-sectional sample was observed with a scanning electron microscope (SEM), and 100 tabular metal particles in the view field were analyzed in point of the tilt angle thereof to the horizontal plane of the substrate (corresponding to ±θ in Fig. 5B). The found data were averaged to give a mean value of the tilt angle.

### (Evaluation Criterion of Tilt Angle)

A: At most ±30°C
B: Over ±30°C

The obtained results are shown in the following Table 1.

### <Evaluation of Heat Ray Shielding Material>

The obtained heat ray shielding material was evaluated for the following characteristics. The obtained results are shown in Table 1.

### - Adhesion-Failure Resistance -

The obtained heat ray shielding material was checked for the adhesion-failure resistance (at 4 kg/cm²).

A4300 which is the substrate overlapped the metal particle-containing layer side or the overcoat layer side of the obtained heat ray shielding material. This was interposed between the upper and lower silicon rubbers of 2.5 cm², and then a weight of 10 kg was placed thereon from the top. This was unwound after 24 hours had elapsed in a constant temperature bath with the temperature 40°C and the relative humidity of 50%, and the number of adhered locations was evaluated with the naked eye in the following criterion. In addition, practical use is allowable when the evaluation is at least B.

### (Evaluation Criterion)

D: Front surface was adhered to be difficult to peel off
C: Adhered at five or more locations
B: Adhered at one to five locations
A: Not adhered

### - Scratch Resistance -

A cardboard piece of 1 cm² was fixed on the rubbing tip of a rubbing tester. In a smooth-surface dish, the sample was clipped at the top and the bottom thereof. At room temperature of 25°C, a load of 300 g was applied to the cardboard piece and the sample was rubbed with the rubbing tip while the rubbing frequency was varied in the test. The rubbing condition was as follows:
Rubbing distance (one way): 5 cm
Rubbing speed: about 0.5 back-and-forth/second

After rubbed, the sample was observed. The rubbing resistance of the sample was evaluated by the rubbing frequency that had caused film peeling, as follows. In addition, practical use is allowable when the evaluation is at least B.

### (Evaluation Criterion)

C: Film peeled in 0 to 1 back-and-forth rubbings.
B: Film peeled in 2 to 10 back-and-forth rubbings.
A: Film did not peel after 10 back-and-forth rubbings.

### - Measurement of Haze -

With a hazemeter (NDH-5000 made by Nippon Denshoku), the haze (%) of the heat ray shielding material (a support, or a laminate of the metal particle-containing layer and the overcoat layer) obtained as above was measured.

### <Production of Laminate Structure>

The release sheet of the obtained heat ray shielding material was peeled off. A laminate structure of the heat ray shielding material of Example 1 was produced by laminating the material with transparent glass (thickness: 3 mm).

The transparent glass was one which was cleaned with isopropyl alcohol, and was pressed in the lamination in the surface pressure of 0.5 kg/cm2 under the condition of 25°C and the humidity of 65% by using a rubber roller.

### [Comparative Examples 1 to 3]

A heat ray shielding material and a laminate structure thereof of Comparative Example 1 were produced in the same manner as in Example 1 except that Coating liquid 2 for overcoat layer use was not coated on the PET film in Example 1.

In addition, heat ray shielding materials and laminate structures thereof of Comparative Examples 2 and 3 were produced in the same manner as Comparative Example 1 except that the thickness of the substrate film of Comparative Example 1 was changed as shown in the following Table 1.

### [Comparative Examples 4 to 6]

A heat ray shielding material and a laminate structure thereof of Comparative Example 4 were produced in the same manner as Example 1 except for being changed to a coating liquid having the same composition as Coating liquid 2 except that the fine particles were not added to Coating liquid 2 for overcoat layer use instead of Coating liquid 2 for overcoat layer use in Example 1.

Further, heat ray shielding materials and laminate structures thereof of Comparative Examples 5 and 6 were produced in the same manner as in Comparative Example 1 except that the thickness of the substrate film was changed as shown in the following Table 1 in Comparative Example 4.

### [Examples 2 to 5]

Heat ray shielding materials and laminate structures thereof of Examples 2 to 5 were produced in the same manner as in Example 1 except for being changed to a coating liquid having the same composition as Coating liquid 2 using the fine particles with the mean particle diameter shown in Table 1 instead of Coating liquid 2 for overcoat layer use in Example 1.

### [Examples 6 to 15 and 26 to 30]

Further, heat ray shielding materials and laminate structures thereof of Examples 6 to 15 and 26 to 30 were produced in the same manner as in Examples 1 to 5 except that the thickness of the substrate film was changed as shown in the following Table 1 in Examples 1 to 5.

### [Examples 16 to 20]

Heat ray shielding materials and laminate structures thereof of Examples 16 to 20 were produced in the same manner as in Example 1 except for being changed to a coating liquid having the same composition as Coating liquid 2 and except that the addition amount of fine particles was changed as shown in Table 1 instead of Coating liquid 2 for overcoat layer use in Example 1.

### [Examples 21 to 25]

Heat ray shielding materials and laminate structures thereof of Examples 21 to 25 were produced in the same manner as in Examples 16 to 20 except that the thickness of the substrate film was changed as shown in the following Table 1 in Examples 16 to 20.

The heat ray shielding materials of Examples 2 to 30 and Comparative Examples 1 to 6 were evaluated for characteristics, similarly to Example 1. The results thereof are shown in the following Table 1.

**Table 1**

| | Configuration of heat ray shielding material | | | | | | | Evaluation of heat ray shielding material | | |
|---|---|---|---|---|---|---|---|---|---|---|
| | Substrate | Metal particle-containing layer | | Overcoat layer | | | | Adhesion-failure resistance (at 4 Kg/cm²) | Scratch resistance | Haze (%) |
| | Thickness [µm] | Tabular silver particles dispersion | Particle tilt angle (plane orientation) | Presence/ absence | Mean particle diameter of fine particles [nm] | Fine particles/ binder mass ratio | Thickness [nm] | | | |
| Comparative Example 1 | 50 | B1 | A | No | - | - | - | D | C | 2.7 |
| Comparative Example 2 | 75 | B1 | A | No | - | - | - | B | C | 2.5 |
| Comparative Example 3 | 100 | B1 | A | No | - | - | - | B | C | 2.4 |
| Comparative Example 4 | 50 | B1 | A | Yes | - | 0 | 340 | D | A | 2.1 |
| Comparative Example 5 | 75 | B1 | A | Yes | - | 0 | 340 | C | A | 2 |
| Comparative Example 6 | 100 | B1 | A | Yes | - | 0 | 340 | C | A | 2.1 |
| Example 1 | 50 | B1 | A | Yes | 40 | 0.093 | 340 | A | A | 2.1 |
| Example 2 | 50 | B1 | A | Yes | 100 | 0.093 | 340 | A | A | 2.1 |
| Example 3 | 50 | B1 | A | Yes | 300 | 0.093 | 340 | A | A | 2 |
| Example 4 | 50 | B1 | A | Yes | 500 | 0.093 | 340 | A | A | 2.3 |
| Example 5 | 50 | B1 | A | Yes | 1000 | 0.093 | 340 | A | A | 2.6 |
| Example 6 | 75 | B1 | A | Yes | 40 | 0.093 | 340 | A | A | 2 |
| Example 7 | 75 | B1 | A | Yes | 100 | 0.093 | 340 | A | A | 2.1 |
| Example 8 | 75 | B1 | A | Yes | 300 | 0.093 | 340 | A | A | 2.1 |
| Example 9 | 75 | B1 | A | Yes | 500 | 0.093 | 340 | A | A | 2.3 |
| Example 10 | 75 | B1 | A | Yes | 1000 | 0.093 | 340 | A | A | 2.5 |
| Example 11 | 100 | B1 | A | Yes | 40 | 0.093 | 340 | A | A | 2.1 |
| Example 12 | 100 | B1 | A | Yes | 100 | 0.093 | 340 | A | A | 2.2 |
| Example 13 | 100 | B1 | A | Yes | 300 | 0.093 | 340 | A | A | 2 |
| Example 14 | 100 | B1 | A | Yes | 500 | 0.093 | 340 | A | A | 2.4 |
| Example 15 | 100 | B1 | A | Yes | 1000 | 0.093 | 340 | A | A | 2.8 |
| Example 16 | 75 | B1 | A | Yes | 40 | 0.372 | 85 | A | B | 2.5 |
| Example 17 | 75 | B1 | A | Yes | 40 | 0.186 | 170 | A | A | 2.1 |
| Example 18 | 75 | B1 | A | Yes | 40 | 0.047 | 680 | A | A | 2.1 |
| Example 19 | 75 | B1 | A | Yes | 40 | 0.023 | 1360 | A | A | 2 |
| Example 20 | 75 | B1 | A | Yes | 40 | 0.012 | 2720 | B | A | 1.9 |
| Example 21 | 38 | B1 | A | Yes | 40 | 0.372 | 85 | A | B | 2.5 |
| Example 22 | 38 | B1 | A | Yes | 40 | 0.186 | 170 | A | A | 2.1 |
| Example 23 | 38 | B1 | A | Yes | 40 | 0.047 | 680 | A | A | 2.1 |
| Example 24 | 38 | B1 | A | Yes | 40 | 0.023 | 1360 | B | A | 2 |
| Example 25 | 38 | B1 | A | Yes | 40 | 0.012 | 2720 | B | A | 1.9 |
| Example 26 | 38 | B1 | A | Yes | 40 | 0.093 | 340 | A | A | 2 |
| Example 27 | 38 | B1 | A | Yes | 100 | 0.093 | 340 | A | A | 2.1 |
| Example 28 | 38 | B1 | A | Yes | 300 | 0.093 | 340 | A | A | 2 |
| Example 29 | 38 | B1 | A | Yes | 500 | 0.093 | 340 | A | A | 2.4 |
| Example 30 | 38 | B1 | A | Yes | 1000 | 0.093 | 340 | A | A | 2.8 |

It has been found from the results of Table 1 that the heat ray shielding material of the present invention has favorable adhesion-failure resistance and scratch resistance, and low haze.

On the other hand, it has been found from Comparative Examples 1 to 3 that the scratch resistance is worse in all the cases where the overcoat layer is not provided, and it has been found that the adhesion-failure resistance is also worse in Comparative Example 1.

It has been found from Comparative Examples 4 to 6 that the adhesion-failure resistance is worse in all the cases where the fine particles are not added to the overcoat layer.

### <Evaluation of Other Characteristics>

### - Measurement of Reflection Spectrum and Transmission Spectrum -

In the heat ray shielding material of each Example, the reflection spectrum and the transmission spectrum were measured by using an ultraviolet-visible near infrared spectroscope (V-670 made by Jasco). In the measurement of the reflection spectrum, an absolute reflectance measurement unit (ARV-474 made by Jasco) was used, and incident light was incident light which could be considered to be unpolarized light through a 45° polarization plate. In all the Examples, the solar reflectance calculated based on JIS K5602 was at least 15%.

### - Visible Light Transmittance -

In the heat ray shielding material of each Example, the transmittance of each wavelength measured in a range of from 380 nm to 780 nm was corrected by spectral luminous efficiency at each wavelength, and the corrected value was used as visible light transmittance. In all the Examples, the visible light transmittance was at least 65%.

### - Confirmation of Existence Region of Tabular Metal Particles in Metal Particle-containing Layer -

In the heat ray shielding material of each Example, when the thickness of the above-mentioned metal particle-containing layer is referred to as d, it was calculated and confirmed that at least 80% by number of the hexagonal to circular, tabular metal particles exist in the range of from the surface to d/3, of the metal particle-containing layer, from the image taken through SEM observation of a vertical cross-sectional sample of the heat ray shielding material.

### Industrial Applicability

The heat ray shielding material of the present invention has high visible light transmittance and high solar reflectance, has excellent durability and weather resistance, and therefore discoloration with time due to ultraviolet rays is reduced. Accordingly, the heat ray shielding material can be favorably utilized as various members that are required to prevent heat ray transmission, for example, for films and laminate structures for vehicles such as automobiles, buses, etc.; films and laminate structures for buildings, etc.

### Reference Signs List

- 1: Substrate
- 2: Metal Particle-containing Layer
- 3: Tabular Metal Particles
- 4: Overcoat Layer
- 5: Metal Oxide Particle Layer
- 10: Heat Ray Shielding Material
- 11: Adhesive Layer
- 12: UV Absorbent Layer
- 13: Overcoat Layer
- 14: Metal Particle-containing Layer
- 15: Substrate
- D: Diameter
- L: Thickness
- f(λ): Thickness of Particles-Existing Region

## Claims

1. A heat ray shielding material comprising a metal particle-containing layer that contains at least one kind of metal particle and an overcoat layer that is in close contact with at least one surface of the metal particle-containing layer, wherein:
hexagonal to circular tabular metal particles are contained in 60% by number or more relative to total number of the metal particles contained in the metal particle-containing layer,
a main plane of the hexagonal to circular, tabular metal particles is plane-oriented in a range of from 0° to ±30° on average relative to one surface of the metal particle-containing layer, and
the overcoat layer contains fine particles.

2. The heat ray shielding material according to Claim 1, wherein the fine particles are colloidal silica.

3. The heat ray shielding material according to Claim 1 or 2, wherein the fine particles has a mean particle diameter of from 5 nm to 1500 nm.

4. The heat ray shielding material according to any one of Claims 1 to 3, wherein the fine particles has a mean particle diameter of from 5 nm to 300 nm.

5. The heat ray shielding material according to any one of Claims 1 to 4, having a transmission haze of at most 3%.

6. The heat ray shielding material according to any one of Claims 1 to 5, wherein the overcoat layer further contains a binder and a mass ratio of the fine particles to the binder in the overcoat layer is from 0.02 to 0.4.

7. The heat ray shielding material according to any one of Claims 1 to 6, wherein the overcoat layer has a thickness of from 100 nm to 2000 nm.

8. The heat ray shielding material according to any one of Claims 1 to 7, wherein, when a thickness of the metal particle-containing layer is referred to as d, at least 80% by number of the hexagonal to circular, tabular metal particles exist in a range of from the surface to d/2, of the metal particle-containing layer.

9. The heat ray shielding material according to Claim 8, wherein the overcoat layer is in close contact with the surface of the metal particle-containing layer on a side on which at least 80% by number of the hexagonal to circular, tabular metal particles are located.

10. The heat ray shielding material according to any one of Claims 1 to 9, wherein the hexagonal to circular, tabular metal particles has a coefficient of variation of particle size distribution of at most 30%.

11. The heat ray shielding material according to any one of Claims 1 to 10, wherein the hexagonal to circular, tabular metal particles has a mean particle diameter of from 70 nm to 500 nm, and an aspect ratio, that is mean particle diameter/mean particle thickness, of from 8 to 40.

12. The heat ray shielding material according to any one of Claims 1 to 11, wherein the tabular metal particles contain silver.

13. The heat ray shielding material according to any one of Claims 1 to 12, having a visible light transmittance of at least 65%.

14. The heat ray shielding material according to any one of Claims 1 to 13, further comprising:
a substrate that is disposed on a surface on an opposite side to the surface of the metal particle-containing layer where the overcoat layer is disposed.

15. The heat ray shielding material according to any one of Claims 1 to 14, wherein the substrate has a thickness of from 10 µm to 100 µm.

16. The heat ray shielding material according to any one of Claims 1 to 15, further comprising a metal oxide particle-containing layer that contains at least one kind of metal oxide particle.

17. The heat ray shielding material according to Claim 16, wherein the metal oxide particles are tin-doped indium oxide particles.

18. The heat ray shielding material according to any one of Claims 1 to 17, wherein the heat ray shielding material is wound in a roll form.

19. The heat ray shielding material according to any one of Claims 1 to 18, wherein the overcoat layer is an adhesive layer.

20. A laminate structure comprising:
the heat ray shielding material according to any one of Claims 1 to 19; and
glass or plastic that is laminated with the heat ray shielding material.
